# EUROPÄISCHE PATENTSCHRIFT

(11) **EP 0 705 686 B1**
(45) Veröffentlichungstag und Bekanntmachung des Hinweises auf die Patenterteilung: **10.03.1999**
(21) Anmeldenummer: 95114606.7
(22) Anmeldetag: 16.09.1995
(51) Int. Cl.: B32B 17/10, C03C 27/12

(54) **Verfahren zum Aufbringen eines aus einem Kitt geformten Ablaufschutzrandes auf eine Glasplatte im Zuge der Herstellung von Brandschutz-Glaseinheiten**
Process for forming a protective barrier edging of a mastic on a glass pane during the production of fireproof glass units
Procédé pour appliquer un bord de protection fabriqué d'un mastic sur une plaque de verre au cours de la fabrication des unités de verre résistant au feu

(30) Priorität: 07.10.1994 DE 4435843
(43) Veröffentlichungstag der Anmeldung: 10.04.1996
(73) Patentinhaber: FLACHGLAS AKTIENGESELLSCHAFT, 90766 Fürth (DE)
(72) Erfinder: Nolte, Hans-Henning, D-45884 Gelsenkirchen (DE); Grünzel, Helga, D-45894 Gelsenkirchen (DE); Sattler Bernhard, D-44379 Dortmund (DE)
(74) Vertreter: Honke, Manfred, Dr.-Ing.

(56) Entgegenhaltungen:
- PATENT ABSTRACTS OF JAPAN vol. 10 no. 239 (C-367) ,19.August 1986 & JP-A-61 072655 (TOYODA GOSEI CO LTD)
- PATENT ABSTRACTS OF JAPAN vol. 8 no. 272 (E-284) ,13.Dezember 1984 & JP-A-59 141141 (MATSUSHITA DENKO KK)

## Beschreibung

Die Erfindung betrifft ein Verfahren zum Aufbringen eines aus einem Kitt geformten Ablaufschutzrandes auf eine Glasplatte im Zuge der Herstellung von Brandschutz-Glaseinheiten, die die Glasplatte, eine Brandschutz-Zwischenschicht und eine abdeckende Platte aus Glas oder Kunststoff aufweisen. Glasplatten mit Ablaufschutzrand sind bei der Herstellung von Brandschutz-Glaseinheiten von großer Bedeutung. Brandschutz-Glaseinheiten werden regelmäßig dadurch hergestellt, daß man auf eine waagerecht liegende Glasplatte, die mit einem Ablaufschutzrand versehen ist, eine wasserhaltige Alkalisilicatlösung, die Beimischungen aufweisen kann, aufbringt, die von dem als Damm wirkenden Ablaufschutzrand auf der Glasplatte gleichsam festgehalten wird. Das Wasser dieser Lösung wird durch Einwirkung erhöhter Temperaturen entfernt und die flüssige Schicht verfestigt sich zur Brandschutz-Zwischenschicht. Im allgemeinen werden bei der Verfestigung innerhalb der Schicht Temperaturen von bis zu 130°C nicht überschritten. Nach der Verfestigung wird die Schicht mit einer weiteren Glasplatte oder auch mit einer Kunststoffplatte verbunden, z. B. durch Verkleben. Auf die so hergestellte Brandschutz-Glaseinheit können in analoger Weise weitere Silikatschichten, Glasplatten oder Kunststoffplatten aufgebracht werden (vgl. DE 19 00 054 B2). In der Vergangenheit wurde der Ablaufschutzrand durch einen Rahmen gebildet, der auf die Glasplatte aufgesetzt wurde. Das ist im Rahmen einer industriellen Serienfertigung aufwendig. In neuerer Zeit wird daher der Ablaufschutzrand aus Kitt geformt. Wie auch immer im Rahmen der bekannten Maßnahmen im einzelnen verfahren wird, es fällt am Ende des Herstellungsprozesses ein Randabschnitt der Glasplatte an, der aus dem Verfahren zur Herstellung der Brandschutz-Glaseinheiten herausgeführt werden muß.

Bei dem aus der Praxis bekannten Verfahren, von dem die Erfindung ausgeht, wird der Ablaufschutzrand aus einem Kitt geformt, der hauptsächlich aus Kaolin und Natron-Wasserglas besteht und außerdem Wasser aufweist. Das hat sich in bezug auf die Herstellung der Brandschutz-Glaseinheiten bewährt, führt jedoch zu Randabschnitten, die verworfen werden müssen. Eine Rückführung der Randabschnitte in eine Glasschmelze ist nicht möglich, weil mit dem Kaolin und dem Wasserglas in der Glasschmelze störende Verunreinigungen eingetragen werden. Die Mischung aus Kaolin, Wasserglas und Wasser läßt sich zwar einfach herstellen, jedoch kann nicht verhindert werden, daß in dem Kitt und damit in dem Ablaufschutzrand, der auf eine Glasplatte aufgebracht wird, Blasen entstehen. Das führt häufig dazu, daß bei der beschriebenen Wärmebehandlung Löcher in dem Ablaufschutzrand entstehen, durch die die Mischung, aus der die Brandschutz-Zwischenschicht sich bildet, abläuft. Dadurch entstehen erhebliche Verluste und Verunreinigungen der Anlage.

Die allgemeine Aufgabe der Erfindung lautet, Brandschutz-Glaseinheiten so herzustellen, daß die oben behandelten Randabschnitte in eine Glasschmelze wieder zurückgeführt werden können. Der Erfindung liegt konkret das technische Problem zugrunde, ein Verfahren zum Aufbringen eines aus einem Kitt geformten Ablaufschutzrandes auf eine Glasplatte anzugeben, welches zu im vorbeschriebenen Sinne rückführbaren Randabschnitten führt.

Zur Lösung dieses technischen Problems ist Gegenstand der Erfindung ein Verfahren zum Aufbringen eines aus einem Kitt geformten Ablaufschutzrandes auf eine Glasplatte im Zuge der Herstellung von Brandschutz-Glaseinheiten, welche die Glasplatte, eine Brandschutz-Zwischenschicht und eine abdeckende Platte aus Glas oder Kunststoff aufweisen, mit den folgenden Merkmalen: 1.1) Der Kitt wird aus einem feinteiligen Glasbildner als Füllstoff und aus einem polymeren Cellulose-Derivat mit Wasser zu einer Dispersion angemacht, 1.2) der Dispersion wird eine mineralische Säure oder eine Mischung aus mineralischen Säuren als Topfzeitregulator in solcher Menge beigemischt, daß die Topfzeitspanne der Dispersion nach dem Anmachen etwa 10 bis 20 Minuten beträgt, 1.3) die mit dem Topfzeitregulator versehene Dispersion wird innerhalb der Topfzeitspanne durch Vibrationseinwirkung und/oder durch Vakuumeinwirkung und/oder durch Rühren von Luftblasen befreit, wobei danach die von Luftblasen befreite Dispersion zum Kitt ausreift und auf den Rand der Glasplatte als Ablaufschutzrand aufgeformt wird.

Die Erfindung geht von der Erkenntnis aus, daß es nicht erforderlich ist, für den Aufbau des Ablaufschutzrandes mit Kaolin zu arbeiten, wenn man als Binder ein polymeres Cellulose-Derivat einsetzt. Wird mit einem polymeren Cellulose-Derivat gearbeitet, so kann als Füllstoff im Sinne des Merkmals 1.1) ein Glasbildner eingesetzt werden. Glasbildner bezeichnet dabei feinteiliges Glas, aber auch die Komponenten der für die Glasherstellung bekannten Gemenge wie Calciumsilicat und Alkalisilikate, die als Gemisch amorph erstarren. Eine Vormischung aus den vorstehend genannten Füllstoffen und einem polymeren Cellulose-Derivat an sich und für sich, ohne weitere Zusätze, zeigt mit dem Anmachen unter Verwendung von Wasser zu einer Dispersion ein störendes Phänomen: Die Viskosität der Mischung steigt störend schnell an. Die sogenannte Topfzeit, in der diese Mischung noch ausreichend flüssig ist, um als Flüssigkeit behandelt und gehandhabt zu werden, ist zu kurz. Überraschenderweise wirkt jedoch schon ein mengenmäßig geringer Zusatz einer mineralischen Säure topfzeitregulierend im Sinne des Merkmals 1.2). Topfzeiten von 10 bis 20 Minuten sind einstellbar. Das erlaubt es, eine Behandlung im Sinne des Merkmals 1.3) durchzuführen und die Dispersion von Luft zu befreien. Dadurch wird erreicht, daß der aus dem gereiften Kitt geformte Ablaufschutzrand keinerlei Luftblasen mehr aufweist. Überraschenderweise können die Randabschnitte in eine Glasschmelze wieder eingebracht werden, ohne daß insoweit irgendwelche Nachteile entstehen. Das gilt auch dann, wenn es sich bei der Glasschmelze um eine Floatglasschmelze handelt, wobei allerdings einige Adaptationen der Verfahrensschritte zweckmäßig sind. Im Rahmen der Erfindung können insbesondere Glasbildner aus der Gruppe "Glasperlen, gemahlenes Glas, Calciumcarbonat, Magnesiumcarbonat, Calciumphosphat, Calciumsulfat, Feinsand" oder Mischungen davon eingesetzt werden. Im Rahmen der Erfindung können insbesondere die polymeren Cellulose-Derivate der Gruppe "Methylhydroxyethylcellulose, Carboxymethylcellulose, Guar" oder Mischungen davon eingesetzt werden. Als mineralische Säuren empfiehlt die Erfindung Säuren der Gruppe "Orthophosphorsäure, phosphorige Säure, Schwefelsäure" und verträgliche Mischungen daraus. Neben den bereits betonten Vorteilen (blasenfreier Ablaufschutzrand, in eine Glasschmelze einführbare Glasabschnitte) resultiert ein besonderer Vorteil daraus, daß für den Ablaufschutzrand ein an sich mit Wasserglas nicht verträgliches saures System eingesetzt wird. Hierdurch bildet sich an der Grenzfläche Ablaufschutzrand/Brandschutz-Zwischenschicht eine dünne aber dichte Gelschicht, die ein Abschwemmen von Kitt-Teilchen sowie eine Porenbildung und damit das Entstehen von Randblasen verhindert. Man erzielt auf diese Weise nicht nur höhere Ausbeuten, es kann vielmehr auch mit wesentlich kürzeren Trocknungszeiten gearbeitet werden.

Im einzelnen bestehen im Rahmen der Erfindung mehrere Möglichkeiten der weiteren Ausbildung und Gestaltung. Vorzugsweise werden als feinteilige Glasbildner floatglasfähige Substanzen verwendet. Insbesondere kann Glasmehl verwendet werden, aber auch mit feinteiligem Calciumcarbonat als Glasbildner kann gearbeitet werden. Stets können die feinteiligen Glasbildner einen Zusatz an feinteiligem Quarzsand aufweisen.

Im Rahmen der Erfindung kann mit den verschiedensten Cellulose-Derivaten gearbeitet werden, wobei die Cellulose-Derivate der vorstehend angegebenen Gruppe sich bewährt haben. Vorzugsweise wird als Cellulose-Derivat hochpolymere Methylhydroxyethylcellulose eingesetzt. Als mineralische Säure wird vorzugsweise Phosphorsäure verwendet. Im allgemeinen reicht es, die mineralische Säure in einer Menge von unter 1 Masse-% zu verwenden. Bewährt hat sich im Rahmen der Erfindung eine Dispersion, die 2,5 bis 3 Masse-% eines hochpolymeren Cellulose-Derivates, 50 bis 57 Masse-% feinteilige Glasbildner, 0,4 bis 1,5 Masse-% Orthophosphorsäure und im übrigen Wasser aufweist.

Gegenstand der Erfindung ist auch die Verwendung der bei dem Verfahren zur Fertigstellung der Brandschutz-Glaseinheiten nach einem der Ansprüche 1 bis 9 anfallenden Kittrandabschnitte als Zusatz zu Glasschmelzen, vorzugsweise bei der Floatglasherstellung.

Im folgenden wird die Erfindung anhand eines Ausführungsbeispiels ausführlicher erläutert:

In einen geeigneten Behälter wurden zunächst 50 Liter entsalztes Wasser eingebracht, dem unter Rühren 1 kg einer 85 %-igen Orthophosphorsäure beigefügt wurde. Danach wurden unter weiterem Rühren 50 kg eines feinpulverigen Glasmehls hinzugegeben. Dabei wurde das Glasmehl schon weitgehend von der anhaftenden Luft befreit. Als letztes wurden 2,4 kg Methylhydroxyethylcellulose eingerührt und danach unter Vakuum weitergerührt. Nach ca. zehn Minuten war der Mischvorgang abgeschlossen, die Masse war homogenisiert und konnte abgefüllt werden, bevor ihre Viskosität auf den für ihre Funktion als Ablaufschutz-Barriere erforderlichen Endwert angestiegen war. Durch die zunächst sehr viel niedrigere Viskosität wurde der Entgasungsvorgang bedeutend erleichtert und verbessert, wie ein Vergleich mit dem vorher verwendeten Kittsystem ergab. Außerdem wurde durch die Gelbildung an der Grenzfläche zum aufgebrachten Wasserglas das Auftreten von Randblasen sowie Abschwemmungen von Kittpartikeln sicher vermieden.

## Patentansprüche

1. Verfahren zum Aufbringen eines aus einem Kitt geformten Ablaufschutzrandes auf eine Glasplatte im Zuge der Herstellung von Brandschutz-Glaseinheiten, welche die Glasplatte, eine Brandschutz-Zwischenschicht und eine abdeckende Platte aus Glas oder Kunststoff aufweisen, mit den folgenden Merkmalen:
1.1) Der Kitt wird aus einem feinteiligen Glasbildner als Füllstoff und aus einem polymeren Cellulose-Derivat mit Wasser zu einer Dispersion angemacht,
1.2) der Dispersion wird eine mineralische Säure oder eine Mischung aus mineralischen Säuren als Topfzeitregulator in solcher Menge beigemischt, daß die Topfzeitspanne der Dispersion nach dem Anmachen etwa 10 bis 20 Minuten beträgt,
1.3) die mit dem Topfzeitregulator versehene Dispersion wird innerhalb der Topfzeitspanne durch Vibrationseinwirkung und/oder Vakuumeinwirkung und/oder Rühren von Luftblasen befreit,
wobei danach die von Luftblasen befreite Dispersion zum Kitt ausreift und auf den Rand der Glasplatte als Ablaufschutzrand aufgeformt wird.

2. Verfahren nach Anspruch 1, wobei als feinteilige Glasbildner floatglasfähige Substanzen verwendet werden.

3. Verfahren nach einem der Ansprüche 1 oder 2, wobei als feinteiliger Glasbildner Glasmehl verwendet wird.

4. Verfahren nach einem der Ansprüche 1 oder 2, wobei als feinteiliger Glasbildner Calciumcarbonat verwendet wird.

5. Verfahren nach einem der Ansprüche 1 bis 4, wobei die feinteiligen Glasbildner einen Zusatz von feinteiligem Quarzsand aufweisen.

6. Verfahren nach einem der Ansprüche 1 bis 5, wobei als polymeres Cellulose-Derivat hochpolymere Methylhydroxyethylcellulose eingesetzt wird.

7. Verfahren nach einem der Ansprüche 1 bis 6, wobei als mineralische Säure Phosphorsäure verwendet wird.

8. Verfahren nach einem der Ansprüche 1 bis 7, wobei die mineralische Säure in einer Menge von unter 1 Masse-% eingesetzt wird.

9. Verfahren nach einem der Ansprüche 1 bis 8, wobei die von Luft befreite Dispersion 2,5 bis 3 Masse-% eines hochpolymeren Cellulose-Derivates, 50 bis 57 Masse-% feinteilige Glasbildner, 0,4 bis 1,5 Masse-% Orthophosphorsäure und im übrigen Wasser aufweist.

10. Verwendung der bei dem Verfahren zur Fertigstellung der Brandschutz-Glaseinheiten nach einem der Ansprüche 1 bis 9 anfallenden Kittrandabschnitte als Zusatz zu Glasschmelzen, insbesondere bei der Floatglasherstellung.

## Claims

1. A method of applying an anti-runoff border, which is formed from a putty, to a glass pane in the course of manufacturing fire-proof glass units which comprise the glass pane, a fire-proof intermediate layer and a covering pane made of glass or plastics, - having the following features:
1.1) the putty, comprising a finely divided glass-forming substance as a filler and a polymeric cellulose derivative, is mixed with water to form a dispersion,
1.2) a mineral acid or a mixture of mineral acids is added as a pot life regulator to the dispersion, in an amount such that the pot life range of the dispersion after mixing is about 10 to 20 minutes,
1.3) the dispersion which is provided with the pot life regulator is freed from air bubbles within the pot life range by the effect of vibration and/or by the effect of vacuum and/or by stirring,
whereupon the dispersion which is freed from air bubbles thereafter matures to form the putty and is moulded on to the edge of the glass pane as an anti-runoff border.

2. A method according to claim 1, wherein substances which are capable of forming float glass are used as finely divided glass-forming substances.

3. A method according to either one of claims 1 or 2, wherein glass powder is used as a finely divided glass-forming substance.

4. A method according to either one of claims 1 or 2, wherein calcium carbonate is used as a finely divided glass-forming substance.

5. A method according to any one of claims 1 to 4, wherein the finely divided glass-forming substances comprise an addition of finely divided quartz sand.

6. A method according to any one of claims 1 to 5, wherein high-polymer methylhydroxyethyl cellulose is used as a polymeric cellulose derivative.

7. A method according to any one of claims 1 to 6, wherein phosphoric acid is used as a mineral acid.

8. A method according to any one of claims 1 to 7, wherein the mineral acid is used in an amount less than 1 % by weight.

9. A method according to according to any one of claims 1 to 8, wherein the dispersion which is freed from air contains 2.5 to 3 % by weight of a high-polymer cellulose derivative, 50 to 57 % by weight of finely divided glass-forming substances and 0.4 to 1.5 % by weight of orthophosphoric acid.

10. The use of the putty border sections which are produced during the finishing of fire-proof glass units as an addition to glass melts, particularly during the production of float glass.

## Revendications

1. Procédé de réalisation d'un bord de retenue moulé a partir d'un ciment sur une vitre au cours de la fabrication de vitrages pare-feu qui comprennent la feuille de verte, une couche pare-feu intermédiaire et une feuille couverture en verte ou en matière plastique, présentant les caractéristiques suivantes :
1.1 on prépare le ciment sous la forme d'une dispersion dans l'eau d'un agent de vitrification en fines particules en tant que charge et d'un dérivé polymère de la cellulose,
1.2 on ajoute à la dispersion un acide minéral ou un mélange d'acides minéraux en tant que régulateur de temps ouvert, en une quantité telle que le temps ouvert de la dispersion après préparation soit d'environ 10 à 20 minutes,
1.3 on débarrasse la dispersion dotée du régulateur de temps ouvert des bulles d'air, pendant le temps ouvert, par application de vibrations et/ou application d'une dépression et/ou par agitation,
la dispersion débarrassée des bulles d'air prenant ensuite pour former un ciment et étant mise en forme en tant que bord de retenue sur le pourtour de la feuille de verre.

2. Procédé selon la revendication 1, dans lequel on utilise comme agent de vitrification en fines particules des substances susceptibles de former du verte flotté.

3. Procédé selon la revendication 1 ou 2, dans lequel on utilise de la farine de verre comme agent de vitrification en fines particules.

4. Procédé selon la revendication 1 ou 2, dans lequel on utilise du carbonate de calcium comme agent de vitrification en fines particules.

5. Procédé selon une des revendications 1 à 4, dans lequel les agents de vitrification en fines particules comprennent une partie de sable quartzeux en fines particules.

6. Procédé selon une des revendications 1 à 5, dans lequel on utilise comme dérivé polymère de la cellulose de la méthyl-hydroxy-éthylcellulose haut polymère.

7. Procédé selon une des revendications 1 à 6, dans lequel on utilise de l'acide phosphonique comme acide minéral.

8. Procédé selon une des revendications 1 à 7, dans lequel on utilise l'acide minéral en une quantité inférieure à 1 % de la masse.

9. Procédé selon une des revendications 1 à 8, dans lequel la dispersion débarrassée de l'air comporte 2,5 à 3 % en masse d'un dérivé haut polymère de la cellulose, 50 a 57 % en masse en agent de vitrification en fines particules et 0,4 à 1,5 % en masse d'acide orthophosphore.

10. Utilisation des découpes des bords en ciment produites lors de la fabrication des vitrages résistant au feu comme élément d'addition dans les bains de verre fondu, notamment dans de la fabrication de verre flotté.
